(19) Europäisches Patentamt
European Patent Office
Office européen des brevets

(11) EP 4 431 540 A1

(12) EUROPEAN PATENT APPLICATION
published in accordance with Art. 153(4) EPC

(43) Date of publication:
**18.09.2024 Bulletin 2024/38**

(21) Application number: **22892405.6**

(22) Date of filing: **13.09.2022**

(51) International Patent Classification (IPC):
***C08G 59/50*** (2006.01) ***C08G 59/56*** (2006.01)
***C09D 163/00*** (2006.01) ***C09D 7/61*** (2018.01)
***C09D 7/63*** (2018.01)

(52) Cooperative Patent Classification (CPC):
**C08G 59/50; C08G 59/56; C09D 7/61; C09D 7/63; C09D 163/00**

(86) International application number:
**PCT/JP2022/034222**

(87) International publication number:
**WO 2023/084904 (19.05.2023 Gazette 2023/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.11.2021 JP 2021183544**

(71) Applicant: **MITSUBISHI GAS CHEMICAL COMPANY, INC.**
**Chiyoda-ku**
**Tokyo 100-8324 (JP)**

(72) Inventors:
- **KAWASHIMA, Yuki**
  **Hiratsuka-shi, Kanagawa 254-0016 (JP)**
- **HANAOKA, Takuma**
  **Hiratsuka-shi, Kanagawa 254-0016 (JP)**

(74) Representative: **Gille Hrabal Partnerschaftsgesellschaft mbB**
**Patentanwälte**
**Brucknerstraße 20**
**40593 Düsseldorf (DE)**

# (54) UNDERWATER CURABLE EPOXY RESIN COMPOSITION, UNDERWATER CURABLE PAINT, CURED PRODUCTS THEREOF, AND UNDERWATER CURABLE EPOXY RESIN CURING AGENT MIXTURE

(57) An underwater curable epoxy resin composition and an underwater curable paint containing a main agent epoxy resin and an underwater curable epoxy resin curing agent containing a reaction composition (A) containing a reaction product of styrene and a polyamine compound represented by the following formula (1); a cured product thereof; and an underwater curable epoxy resin curing agent mixture containing the underwater curable epoxy resin curing agent and a curing accelerator.

$$H_2N\text{-}CH_2\text{-}A\text{-}CH_2\text{-}NH_2 \qquad (1)$$

wherein A is a 1,2-phenylene group, a 1,3-phenylene group, or a 1,4-phenylene group.

## Description

### Technical Field

The present invention relates to an underwater curable epoxy resin composition, an underwater curable paint, a cured product thereof, and an underwater curable epoxy resin curing agent mixture.

### Background Art

Underwater curable paints, which are anticorrosive paints that can be applied underwater and in humid environments, are known. Underwater curable paints are mainly used for repair work on metal or concrete structures such as steel pipe shafts, water tanks, and water gates.

Examples where an underwater curable epoxy resin composition used in an underwater curable paint or in an underwater curable composite composition to be used as a construction material are known, and as an underwater curable epoxy resin curing agent, a polyamine compound or a modified polyamine compound such as a Mannich-modified product or an epoxy-modified product thereof is used (see, for example, PTL 1 to 4).

### Citation List

### Patent Literature

PTL 1: JP 63-030568 A
PTL 2: JP 63-142202 A
PTL 3: JP 63-179973 A
PTL 4: JP 2019-218237 A

### Summary of Invention

### Technical Problem

Since an underwater curable paint is applied onto a target object that is underwater, it is desired that the underwater curable paint have good applicability underwater.

Further, among underwater curable paints, anticorrosive paints for ships, bridges, and land/marine railway structures are required to have high salt water resistance in order to suppress the occurrence of rust in seawater. However, the underwater curable paints disclosed in PTL 1 to 3 and the underwater curable composite composition disclosed in PTL 4 have room for improvement in terms of improving the salt water resistance of the cured product.

A problem to be solved by the present invention is to provide an underwater curable epoxy resin composition and an underwater curable paint that have good applicability underwater and can form a coating film having high salt water resistance, a cured product thereof, and an underwater curable epoxy resin curing agent mixture.

### Solution to Problem

The present inventors have discovered that the above problem can be solved by using an underwater curable epoxy resin curing agent containing a reaction composition containing a reaction product of styrene and a predetermined polyamine compound.

That is, the present invention relates to the following.

[1] An underwater curable epoxy resin composition containing:

a main agent epoxy resin; and
an underwater curable epoxy resin curing agent containing a reaction composition (A) containing a reaction product of styrene and a polyamine compound represented by the following formula (1):

$$H_2N\text{-}CH_2\text{-}A\text{-}CH_2\text{-}NH_2 \qquad (1)$$

wherein A is a 1,2-phenylene group, a 1,3-phenylene group, or a 1,4-phenylene group.

[2] An underwater curable paint including the underwater curable epoxy resin composition described in [1].

[3] A cured product obtained by curing the underwater curable epoxy resin composition described in [1] or the underwater curable paint described in [2] underwater.

[4] A method of using an underwater curable epoxy resin composition or an underwater curable paint, including a step of applying the underwater curable epoxy resin composition described in [1] or the underwater curable paint described in [2] onto a target object underwater.

[5] Use of a composition containing a main agent epoxy resin and an epoxy resin curing agent containing a reaction composition (A) containing a reaction product of styrene and a polyamine compound represented by the following formula (1), as an underwater curable epoxy resin composition or an underwater curable paint,

$$H_2N\text{-}CH_2\text{-}A\text{-}CH_2\text{-}NH_2 \qquad (1)$$

wherein A is a 1,2-phenylene group, a 1,3-phenylene group, or a 1,4-phenylene group.

[6] An underwater curable epoxy resin curing agent mixture containing: an underwater curable epoxy resin curing agent containing a reaction composition (A) containing a reaction product of styrene and a polyamine compound represented by the following formula (1); and a curing accelerator,

$$H_2N\text{-}CH_2\text{-}A\text{-}CH_2\text{-}NH_2 \qquad (1)$$

wherein A is a 1,2-phenylene group, a 1,3-phenylene group, or a 1,4-phenylene group.

Advantageous Effects of Invention

According to the present invention, it is possible to provide an underwater curable epoxy resin composition and an underwater curable paint that have good applicability underwater and can form a coating film having high salt water resistance, a cured product thereof, and an underwater curable epoxy resin curing agent mixture.

Brief Description of Drawings

[Fig. 1] Fig. 1 is an explanatory diagram of a method for evaluating the underwater applicability of an underwater curable epoxy resin composition, showing from a side view perspective a state where an application substrate 10 immersed in water 11.

[Fig. 2] Fig. 2 is an explanatory diagram of a method for evaluating the underwater applicability of an underwater curable epoxy resin composition, in which Fig. 2(a) is a side view perspective a state in which spacers 12 are placed on the application substrate 10, and Fig. 2(b) is a top view of such state.

[Fig. 3] Fig. 3 is an explanatory diagram of a method for evaluating the underwater applicability of an underwater curable epoxy resin composition, showing from a side view perspective a state where an underwater curable epoxy resin composition 13 has been poured between the spacers 12 and then formed into a film with a spatula.

[Fig. 4] Fig. 4 is an explanatory diagram of a method for evaluating the underwater applicability of an underwater curable epoxy resin composition, showing from a side view perspective a state where the underwater curable epoxy resin composition 13 was formed into a film, the spacers 12 were then removed, and the composition 13 was left to stand in the water 11 to cure.

Description of Embodiments

[Definitions]

As used herein, "underwater curable epoxy resin composition" refers to an epoxy resin composition that is used by applying, depositing and forming into a film, or the like underwater, and curing underwater. The term "water" in "underwater" as used here includes not only pure water but also salt water and seawater.

As used herein, "reaction composition of X and Y" not only refers to a reaction product (adduct) of X and Y, but also by-products other than such a reaction product and unreacted raw materials X, Y, and the like.

As used herein, "having good underwater applicability (of the underwater curable epoxy resin composition)" means: (1) that the composition can be easily applied on a target object underwater; (2) that the composition does not easily disperse into the water during application underwater; and (3) that the composition applied on the target object underwater does not aggregate and the formed coating film maintains smoothness. The underwater applicability of the

underwater curable epoxy composition can be evaluated specifically by the method described in the Examples.

[Underwater curable epoxy resin composition]

The underwater curable epoxy resin composition of the present invention (hereinafter also simply referred to as "epoxy resin composition" or "composition of the present invention") contains a main agent epoxy resin and an underwater curable epoxy resin curing agent containing a reaction composition (A) containing a reaction product of styrene and a polyamine compound represented by the following formula (1).

$$H_2N\text{-}CH_2\text{-}A\text{-}CH_2\text{-}NH_2 \qquad (1)$$

In formula (1), A is a 1,2-phenylene group, a 1,3-phenylene group, or a 1,4-phenylene group.
By having the above constituents, the composition of the present invention has good applicability underwater and can form a coating film having high salt water resistance. The reason for this is not certain, but it is thought to be as follows.
The reaction composition (A) contained in the epoxy resin curing agent is a hydrophobic curing agent component, and therefore it is thought that the composition of the present invention containing that curing agent has improved hydrophobicity, and so even if the composition is moved into water in order to apply onto a target object, problems such as the composition dispersing into the water before application, thereby making it impossible to apply the composition, are unlikely to occur.
On the other hand, according to the findings of the present inventors, it was discovered that if the hydrophobicity of the epoxy resin composition is too high, the composition may aggregate in water, or the composition may be repelled by the water on the surface of the target object and not adhere to the target object, making it impossible to achieve underwater applicability. In contrast, the reaction composition (A) used in the present invention has appropriate hydrophobicity and a relatively low viscosity even among curing agents that are a modified product of a polyamine compound, and so it thought that good underwater applicability onto the target object can be maintained.
In addition, the polyamine compound represented by formula (1), which is a raw material of the reaction composition (A), has high chemical resistance because it has an aromatic ring, and it is believed that due to this a coating film having excellent salt water resistance can be formed.
Each component used in the composition of the present invention is now described below.

<Main agent epoxy resin>

The epoxy resin serving as the main component of the main agent epoxy resin is not particularly limited as long as it has two or more glycidyl groups that can react with an active hydrogen in an underwater curable epoxy resin curing agent. The epoxy resin may be any of a saturated or unsaturated aliphatic compound, an alicyclic compound, an aromatic compound, and a heterocyclic compound. From the viewpoint of improving underwater applicability and the viewpoint of forming a coating film having high salt water resistance, the epoxy resin is preferably an epoxy resin containing an aromatic ring or an alicyclic structure in the molecule.
Specific examples of the epoxy resin include at least one selected from an epoxy resin having a glycidylamino group derived from metaxylylenediamine, an epoxy resin having a glycidylamino group derived from paraxylylenediamine, an epoxy resin having a glycidylamino group derived from 1,3-bis(aminomethyl)cyclohexane, an epoxy resin having a glycidylamino group derived from 1,4-bis(aminomethyl)cyclohexane, an epoxy resin having a glycidylamino group derived from diaminodiphenylmethane, an epoxy resin having a glycidylamino group and/or glycidyloxy group derived from paraaminophenol, an epoxy resin having a glycidyloxy group derived from bisphenol A, an epoxy resin having a glycidyloxy group derived from bisphenol F, an epoxy resin having a glycidyloxy group derived from phenol novolac, and an epoxy resin having a glycidyloxy group derived from resorcinol. These epoxy resins can also be used in combination of two or more.
Even among the above, from the viewpoint of improving underwater applicability and the viewpoint of forming a coating film having high salt water resistance, the epoxy resin preferably includes an aromatic ring in the molecule, more preferably has as a main component at least one selected from the group consisting of an epoxy resin having a glycidylamino group derived from metaxylylenediamine, an epoxy resin having a glycidylamino group derived from paraxylylenediamine, an epoxy resin having a glycidyloxy group derived from bisphenol A, and an epoxy resin having a glycidyloxy group derived from bisphenol F, and from the viewpoint of improving underwater applicability, the viewpoint of forming a coating film having high salt water resistance, and the viewpoint of availability and economy, the epoxy resin preferably has as a main component an epoxy resin having a glycidyloxy group derived from bisphenol A.
As used herein, "main component" means that other components may be included up to a range that does not depart from the spirit of the present invention, and the main component is preferably from 50 to 100% by mass, more

preferably from 70 to 100% by mass, further preferably from 80 to 100% by mass, and still further preferably from 90 to 100% by mass, of the whole.

The epoxy resin may be either a solid epoxy resin or a liquid epoxy resin, but from the viewpoint of improving underwater applicability under low temperature conditions, a liquid epoxy resin is more preferable. As used in the present invention, "solid epoxy resin" means an epoxy resin that is a solid at room temperature (25°C), and "liquid epoxy resin" means an epoxy resin that is a liquid at room temperature (25°C).

The main agent epoxy resin may contain a reactive diluent in addition to the above-described epoxy resin from the viewpoint of reducing viscosity and improving underwater applicability under low temperature conditions.

Examples of the reactive diluent include low-molecular-weight compounds having at least one epoxy group, specifically aromatic monoglycidyl ethers such as phenyl glycidyl ether and cresyl glycidyl ether; alkyl monoglycidyl ethers such as butyl glycidyl ether, hexyl glycidyl ether, octyl glycidyl ether, decyl glycidyl ether, lauryl glycidyl ether, and tetradecyl glycidyl ether; diglycidyl ethers of aliphatic diols such as 1,3-propanediol diglycidyl ether, 1,4-butanediol diglycidyl ether, neopentyl glycol diglycidyl ether, and 1,6-hexanediol diglycidyl ether, and the like.

Among these, from the viewpoint of reducing viscosity and improving underwater applicability under low temperature conditions, at least one selected from the group consisting of alkyl monoglycidyl ethers and diglycidyl ethers of aliphatic diols is preferable as the reactive diluent, and an alkyl monoglycidyl ether is more preferable. The number of carbon atoms of the alkyl is, from the viewpoint of reducing viscosity and improving underwater applicability under low temperature conditions, preferably from 3 to 18, and more preferably from 4 to 12.

The above reactive diluents can be used alone or in combination of two or more.

When the main agent epoxy resin contains a reactive diluent, the content of the reactive diluent in the main agent epoxy resin is usually 1% by mass or more. However, from the viewpoint of improving underwater applicability, the content of the reactive diluent in the main agent epoxy resin is preferably 50% by mass or less, more preferably 30% by mass or less, further preferably 20% by mass or less, still further preferably 10% by mass or less, and still further preferably 5% by mass or less.

An epoxy equivalent weight of the main agent epoxy resin is, from the viewpoint of improving underwater applicability and the viewpoint of forming a coating film having high salt water resistance, preferably 80 g/eq or more, more preferably 100 g/eq or more, further preferably 120 g/eq or more, and still further preferably 150 g/eq or more, and from the viewpoint of low viscosity and curability of the obtained epoxy resin composition, is preferably 1000 g/eq or less, more preferably 800 g/eq or less, further preferably 500 g/eq or less, still further preferably 300 g/eq or less, and still further preferably 200 g/eq or less.

The epoxy equivalent weight described here is the epoxy equivalent weight that is preferred as the main agent epoxy resin. For example, when the main agent epoxy resin contains an above-described epoxy resin to serve as the main component of the main agent epoxy resin and a reactive diluent, it is preferred that the epoxy equivalent weight of the main agent epoxy resin when the reactive diluent is contained be within the above range.

A commercially available product can also be used as the main agent epoxy resin. Examples of commercially available epoxy resins include "jER825", "jER827", "jER828", "jER801N", "jER801PN", "jER802", "jER811", "jER813", "jER819", "jER806", "jER806H", "jER807", and the like, manufactured by Mitsubishi Chemical Corporation.

<Underwater curable epoxy resin curing agent>

The underwater curable epoxy resin curing agent used in the present invention contains a reaction composition (A) containing a reaction product of styrene and a polyamine compound represented by the following formula (1).

$$H_2N\text{-}CH_2\text{-}A\text{-}CH_2\text{-}NH_2 \qquad (1)$$

In formula (1), A is a 1,2-phenylene group, a 1,3-phenylene group, or a 1,4-phenylene group.

In formula (1), A is preferably a 1,3-phenylene group or a 1,4-phenylene group, and more preferably a 1,3-phenylene group. That is, the polyamine compound represented by formula (1) is one or more xylylenediamine selected from the group consisting of o-xylylenediamine, m-xylylenediamine (metaxylylenediamine; MXDA), and p-xylylenediamine (paraxylylenediamine; PXDA), preferably one or more selected from the group consisting of metaxylylenediamine and paraxylylenediamine, and more preferably metaxylylenediamine.

From the viewpoint of improving underwater applicability and the viewpoint of forming a coating film having high salt water resistance, the reaction composition (A) preferably contains 10% by mass or more of a compound represented by the following formula (2).

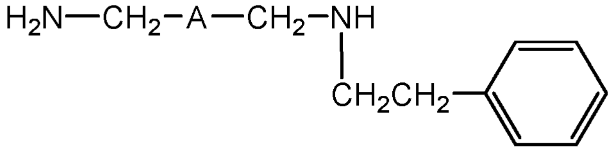

(2)

In formula (2), A is the same as described above.

The compound represented by the above formula (2) is, among the reaction products of styrene and a polyamine compound (hereinafter also referred to as "raw material polyamine") represented by the above formula (1), a reaction product obtained by an addition reaction of 1 mole of styrene and 1 mole of raw material polyamine (hereinafter this is also referred to as "1: 1 adduct").

The reaction composition (A) may contain, in addition to the 1:1 adduct of styrene and raw material polyamine, which is a compound represented by the above formula (2), multi-adducts such as a 2:1 adduct, 3:1 adduct, and 4:1 adduct of styrene and the raw material polyamine. However, among these adducts, the 1:1 adduct of styrene and the raw material polyamine has the lowest active hydrogen equivalent weight. The active hydrogen equivalent weight (hereinafter also referred to as "AHEW") is the molecular weight per 1 equivalent weight of active hydrogen that can react with the epoxy resin, which is the main agent of the epoxy resin composition. Therefore, an epoxy resin curing agent in which the reaction composition (A) containing the compound represented by the above formula (2) as a main component is used can exhibit good curability even when the amount blended in the epoxy resin composition is small.

From the viewpoint of obtaining the above effects, the content of the compound represented by formula (2) in the reaction composition (A) is more preferably 20% by mass or more, further preferably 30% by mass or more, and still further preferably 45% by mass or more, and is 100% by mass or less.

The content of the compound represented by formula (2) in the reaction composition (A) can be determined by gas chromatography (GC) analysis.

The active hydrogen equivalent weight ("AHEW") of the reaction composition (A) is, from the viewpoint of expressing good curability even when the amount blended in the epoxy resin composition is small, preferably 130 or less, more preferably 120 or less, and further preferably 110 or less, and from the viewpoint of ease of manufacture and the like, the AHEW is preferably 80 or more, and more preferably 90 or more.

The AHEW of the reaction composition (A) can be determined, for example, by titration.

The reaction composition (A) is obtained by reacting styrene and a polyamine compound represented by formula (1) by a known method. More specifically, the reaction composition (A) is obtained by subjecting styrene and the raw material polyamine to an addition reaction in the presence of a basic catalyst such as an alkali metal, an alkali metal amide (represented by the formula MNRR', where M is an alkali metal, N is nitrogen, and R and R' are each independently hydrogen or an alkyl group), or an alkylated alkali metal, preferably at 50 to 120°C, and more preferably at 70 to 100°C.

In the addition reaction between styrene and the raw material polyamine, the amount of the basic catalyst used is, when the total amount of the raw material polyamine and styrene used is 100 mol%, preferably from 0.1 to 20 mol%, more preferably from 0.5 to 15 mol%, further preferably 1.0 to 12 mol%, and still further preferably from 1.5 to 10 mol%.

In addition, the amount of styrene and the raw material polyamine used in the addition reaction is, from the viewpoint of obtaining the compound represented by formula (2) with high selectivity, preferably such that the molar ratio of styrene to 1 mole of raw material polyamine is preferably in the range of from 0.1 to 5.0 mol, more preferably from 0.4 to 3.0 mol, further preferably from 0.5 to 1.5 mol, and still further preferably from 0.8 to 1.2 mol.

As the reaction composition (A), a commercially available product such as "Gaskamine 240" manufactured by Mitsubishi Gas Chemical Company, Inc. can also be used.

The content of the reaction composition (A) in the underwater curable epoxy resin curing agent is, from the viewpoint of improving underwater applicability and the viewpoint of forming a coating film having high salt water resistance, preferably 30% by mass or more, more preferably 50% by mass or more, further preferably 70% by mass or more, still further preferably 85% by mass or more, still further preferably 90% by mass or more, and still further preferably 95% by mass or more, and is 100% by mass or less.

(Other curing agent components)

The underwater curable epoxy resin curing agent may further contain other curing agent components other than the reaction composition (A). Examples of "other curing agent components" include a polyamine compound other than the reaction composition (A) or a modified product thereof.

Examples of the polyamine compound include a chain aliphatic polyamine compound such as ethylenediamine, diethylenetriamine, triethylenetetramine, tetraethylenepentamine, pentaethylenehexamine, hexamethylenediamine, 2-methylpentamethylenediamine, and trimethylhexamethylenediamine; an aliphatic polyamine compound having an aromatic ring such as a polyamine compound represented by formula (1); a polyamine compound having an alicyclic structure such as menthenediamine, isophoronediamine, norbornanediamine, tricyclodecanediamine, adamantanediamine, diaminocyclohexane, 1,2-bis(aminomethyl)cyclohexane, 1,3-bis(aminomethyl)cyclohexane, 1,4-bis(aminomethyl)cyclohexane, 1,4-diamino-2-methylcyclohexane, 1,4-diamino-3,6-diethylcyclohexane, diaminodiethylmethylcyclohexane, 3,3'-dimethyl-4,4'-diaminodicyclohexylmethane(bis(4-amino-3-methylcyclohexyl)methane), 3,3',5,5'-tetramethyl-4,4'-diaminodicyclohexylmethane, and 4,4'-diaminodicyclohexylmethane; an aromatic polyamine compound such as phenylenediamine, diaminodiphenylmethane, diaminodiphenylsulfone, diethyltoluenediamine, 2,2'-diethyl-4,4'-methylenedianiline; a polyamine compound having a heterocyclic structure such as N-aminomethylpiperazine, N-aminoethylpiperazine, and N,N'-bis(aminoethyl)piperazine; a polyether polyamine compound, and the like.

Further, examples of a modified product of the polyamine compound include a Mannich-modified product, epoxy-modified product, Michael adduct, Michael addition/polycondensate, styrene-modified product (excluding a styrene modified product of the polyamine compound represented by formula (1)), modified polyamide, and the like of the compounds described above. These can be used alone or in combination of two or more.

However, from the viewpoint of obtaining the effects of the present invention more effectively, the content of curing agent components other than the reaction composition (A) in the underwater curable epoxy resin curing agent is preferably 70% by mass or less, more preferably 50% by mass or less, further preferably 30% by mass or less, still further preferably 15% by mass or less, still further preferably 10% by mass or less, and still further preferably 5% by mass or less, and may be 0% by mass.

The active hydrogen equivalent weight (AHEW) of the underwater curable epoxy resin curing agent is, from the viewpoint of expressing high curability even if the amount added to the underwater curable epoxy resin composition is small, preferably 150 or less, more preferably 140 or less, further preferably 130 or less, and still further preferably 120 or less. On the other hand, from the viewpoint of forming a coating film having high salt water resistance, the AHEW of the curing agent is preferably 80 or more, and more preferably 90 or more.

<Colorant>

The composition of the present invention preferably further contains a colorant from the viewpoint of use as an underwater curable paint.

Examples of the colorant include pigments, dyes, and the like, and a pigment is preferable from the viewpoint of weather resistance, corrosion resistance, and concealing properties.

The type of pigment is not particularly limited, and both organic pigments and inorganic pigments can be used depending on the desired color, and these may be used in combination.

Examples of organic pigments include polycyclic pigments such as azo lakes, azo pigments, phthalocyanine pigments, perylene pigments, perinone pigments, anthraquinone pigments, quinacridone pigments, dioxazine pigments, diketopyrrolopyrrole pigments, thioindigo pigments, isoindolinone pigments, and quinophthalone pigments, dye lakes such as basic dye lakes and acid dye lakes, nitro pigments, nitroso pigments, aniline black, daylight fluorescent pigments, and the like.

Examples of inorganic pigments include inorganic white pigments such as titanium oxide, iron oxide, calcium carbonate, barium sulfate, and aluminum hydroxide, as well as barium yellow, cadmium red, chrome yellow, carbon black, and the like.

The above pigments can be used alone or in combination of two or more. For example, when using the composition of the present invention in various types of paint such as anticorrosive paint, from the viewpoint of weather resistance, corrosion resistance, and concealing properties, an inorganic pigment is preferable, it is more preferable that the composition include an inorganic white pigment, and it is further preferable that the composition include titanium oxide.

<Curing accelerator>

It is preferable that the composition of the present invention further contain a curing accelerator from the viewpoint of further improving underwater applicability.

Examples of the curing accelerator include known curing accelerators, such as at least one selected from the group consisting of a carboxylic acid compound, a phenol compound, a tertiary amine, and a phosphorus compound.

Examples of the carboxylic acid compound include formic acid, acetic acid, propionic acid, butyric acid, lactic acid, malic acid, tartaric acid, salicylic acid, dihydroxybenzoic acid, trihydroxybenzoic acid, 2-hydroxy-3-isopropylbenzoic acid, hydroxynaphthoic acid, dihydroxynaphthoic acid, hydroxymethoxynaphthoic acid, and the like.

Examples of the phenol compound include alkylphenol compounds such as cresol, t-butylphenol, and nonylphenol, as well as styrenated phenol, bisphenol A, and the like.

Examples of the tertiary amine include a tertiary amine or a salt thereof, such as dimethylethylamine, triethylamine, 1,8-diazabicyclo[5.4.0]-undecene-7 (DBU), 1,5-diazabicyclo[4.3.0]-nonene-5 (DBN), tris(dimethylaminomethylphenol), N,N'-bis(3-(dimethylamino)propyl)urea, a salt thereof, and the like.

Examples of the phosphorus compound include a phosphine compound such as triphenylphosphine, a phosphite compound such as triphenylphosphite, a phosphonium salt such as tetraphenylphosphonium/tetraphenylborate, and the like.

The above curing accelerators can be used alone or in combination of two or more. Among them, from the viewpoint of further improving underwater applicability, at least one selected from the group consisting of a carboxylic acid compound, an alkylphenol compound, a tertiary amine, and a phosphorus compound is preferable, at least one selected from the group consisting of a carboxylic acid compound, an alkylphenol compound, and a phosphorus compound is more preferable, at least one selected from the group consisting of salicylic acid, t-butylphenol, nonylphenol, and triphenylphosphite is further preferable, at least one selected from the group consisting of salicylic acid and triphenylphosphite is still further preferable, and salicylic acid is still further preferable.

Further, known modifying components such as plasticizers, known flow adjusting components such as thixotropic agents, and known other components such as leveling agents and tackifiers may be blended with the composition of the present invention, within a range not impairing the effects of the present invention.

<Content>

The content or content ratio of each component in the underwater curable epoxy resin composition is preferably in the following range.

The ratio between the underwater curable epoxy resin curing agent and the main agent epoxy resin in the underwater curable epoxy resin composition is, from the viewpoint of curability, the viewpoint of improving underwater applicability, and the viewpoint of forming a coating film having high salt water resistance, set such that the ratio between the number of active hydrogens in the underwater curable epoxy resin curing agent and the number of epoxy groups in the main agent epoxy resin, that is, [number of active hydrogens/number of epoxy groups], is preferably 1/0.8 to 1/1.2, more preferably 1/0.9 to 1/1.1, and further preferably 1/1.

When the underwater curable epoxy resin composition contains a colorant, the content of the main agent epoxy resin in the composition is, from the viewpoint of improving underwater applicability and the viewpoint of forming a coating film having high salt water resistance, preferably from 10 to 70% by mass, more preferably from 20 to 70% by mass, further preferably from 30 to 60% by mass, and still further preferably from 40 to 60% by mass.

When the underwater curable epoxy resin composition does not contain a colorant, the content of the main agent epoxy resin in the composition is, from the viewpoint of improving underwater applicability and the viewpoint of forming a coating film having high salt water resistance, preferably from 30 to 80% by mass, more preferably from 40 to 70% by mass, and further preferably from 50 to 70% by mass.

When the underwater curable epoxy resin composition contains a colorant, the content of the epoxy resin curing agent in the composition is, from the viewpoint of curability, the viewpoint of improving underwater applicability, and the viewpoint of forming a coating film having high salt water resistance, preferably from 5 to 50% by mass, more preferably from 5 to 40% by mass, further preferably from 10 to 35% by mass, and still further preferably from 20 to 35% by mass.

When the underwater curable epoxy resin composition does not contain a colorant, the content of the epoxy resin curing agent in the composition is, from the viewpoint of curability, the viewpoint of improving underwater applicability, and the viewpoint of forming a coating film having high salt water resistance, preferably from 10 to 60% by mass, more preferably from 15 to 50% by mass, further preferably from 20 to 40% by mass, and still further preferably from 25 to 40% by mass.

The total content of the main agent epoxy resin and the underwater curable epoxy resin curing agent in the underwater curable epoxy resin composition is, from the viewpoint of improving underwater applicability and the viewpoint of forming a coating film having high salt water resistance, preferably 15% by mass or more, more preferably 30% by mass or more, further preferably 40% by mass or more, still further preferably 50% by mass or more, still further preferably 60% by mass or more, and still further preferably 65% by mass or more, and is 100% by mass or less.

When the underwater curable epoxy resin composition contains a colorant, the content of the colorant in the composition is, from the viewpoint of imparting a coloring property and maintaining the salt water resistance of the coating film to be formed, preferably from 1 to 60% by mass, more preferably from 5 to 50% by mass, further preferably from 10 to 40% by mass, and still further preferably from 10 to 35% by mass.

When the underwater curable epoxy resin composition contains a curing accelerator, the content of the curing accelerator in the composition is, from the viewpoint of improving underwater applicability and the viewpoint of solubility, with respect to 100 parts by mass of the epoxy resin curing agent, preferably from 0.1 to 20 parts by mass, more preferably from 0.5 to 15 parts by mass, further preferably from 1 to 15 parts by mass, still further preferably from 2 to 15 parts by mass, still further preferably from 5 to 15 parts by mass, still further preferably from 8 to 15 parts by mass, and still further preferably from 10 to 15 parts by mass.

On the other hand, from the viewpoint of reducing the swelling of the formed coating film in water, the content of the curing accelerator in the composition is preferably small. When prioritizing reducing the swelling of the coating film in water, the content of the curing accelerator in the composition can be, with respect to 100 parts by mass of the epoxy resin curing agent, preferably 10 parts by mass or less, more preferably 5 parts by mass or less, and further preferably 2 parts by mass or less.

Further, the total content of the main agent epoxy resin, underwater curable epoxy resin curing agent, colorant, and curing accelerator in the underwater curable epoxy resin composition is preferably 50% by mass or more, more preferably 70% by mass or more, further preferably 80% by mass or more, and still further preferably 90% by mass or more, and is 100% by mass or less.

The composition of the present invention preferably does not contain water from the viewpoint of suppressing dispersion into water during application. The content of water in the composition is preferably 10% by mass or less, more preferably 5% by mass or less, and further preferably 2% by mass or less, and the lower limit is 0% by mass. However, the water content as described here is the amount of water that is intentionally added, and does not exclude, for example, the content of water that is included in each of the ingredients in advance.

The composition of the present invention preferably does not contain an organic solvent from the viewpoint of improving underwater applicability and the viewpoint of avoiding water contamination due to dispersion in water. The content of the organic solvent in the composition is preferably 10% by mass or less, more preferably 5% by mass or less, and further preferably 2% by mass or less, and the lower limit is 0% by mass. As used herein, organic solvent also includes non-volatile, non-reactive diluents such as benzyl alcohol.

From the viewpoint of using the composition of the present invention as an underwater curable paint, it is preferable that the content of a reinforcing material is small. Examples of reinforcing materials include at least one selected from the group consisting of cement, gypsum, lime, stone powder, calcium carbonate, sand, soil, crushed stone, gravel, crushed glass, cork chips, rubber chips, wood chips, wood powder, asphalt, crushed waste materials, carbon fibers, resin fibers, metal fibers, and glass fibers. The content of the reinforcing material in the composition is preferably 15% by mass or less, more preferably 10% by mass or less, further preferably 5% by mass or less, and still further preferably 2% by mass or less, and the lower limit is 0% by mass.

There are no particular limitations on the method for producing the composition of the present invention, and the composition of the present invention can be produced by mixing the main agent epoxy resin, underwater curable epoxy resin curing agent, and optionally-used colorant, curing accelerator, and other components using a known method and apparatus. In the case of using a curing accelerator, it is preferable to mix the underwater curable epoxy resin curing agent and the curing accelerator in advance, heat to preferably 40 to 100°C, and stir to prepare an underwater curable epoxy resin curing agent mixture, and then mix this mixture with the other components.

[Underwater curable paint]

The present invention provides an underwater curable paint including an underwater curable epoxy resin composition. As used herein, "underwater curable paint" refers to a composition that is used by applying, depositing and forming into a film, or the like onto a target object underwater, and curing underwater, for the purpose of coloring and/or preventing corrosion of the target object. That is, the underwater curable paint preferably has a small content of the reinforcing material described above, preferably 15% by mass or less, more preferably 10% by mass or less, further preferably 5% by mass or less, and still further preferably 2% by mass or less, and the lower limit is 0% by mass.

In addition, the underwater curable paint according to the present invention is also distinguished from paints that are used simply in a humid environment rather than underwater, and from repair materials that are injected into concrete, mortar, or the like.

The underwater curable paint preferably contains the above-described colorant, and may further contain a curing accelerator.

The components contained in the underwater curable paint and the preferred ranges thereof are the same as the ranges described for the underwater curable epoxy resin composition.

The content of the underwater curable epoxy resin composition in the underwater curable paint is, from the viewpoint of improving underwater applicability and the viewpoint of forming a coating film having high salt water resistance, preferably 50% by mass or more, more preferably 70% by mass or more, further preferably 80% by mass or more, and still further preferably 90% by mass or more, and is 100% by mass or less.

The underwater curable paint is used, for example, by applying onto ships, bridges, buildings such as factories, and other land and sea railway structures.

[Cured product]

The present invention provides a cured product obtained by curing the above-described underwater curable

epoxy resin composition or the above-described underwater curable paint underwater.

The curing temperature and the curing time of the underwater curable epoxy resin composition or underwater curable paint can be selected as appropriate. For example, when curing in seawater, the curing temperature (water temperature) is usually selected in the range of -10°C to 40°C.

The form of the cured product is also not particularly limited, but in the case of a cured product of the underwater curable paint, the cured product is usually a film-like cured product.

[Usage method]

The present invention provides a method of using an underwater curable epoxy resin composition or an underwater curable paint, including the step of applying the underwater curable epoxy resin composition or the underwater curable paint onto a target object underwater.

Examples of the target object on which the underwater curable epoxy resin composition or underwater curable paint is applied include ships, bridges, buildings such as factories, and land and sea railway structures. In particular, from the viewpoint of high underwater applicability and enabling a coating film having high salt water resistance to be formed, it is preferable to apply onto a structure in the sea.

Examples of the material of the application target object include steel plate, concrete, mortar, and the like.

One embodiment of the method of using the present invention is, for example, a method in which the underwater curable epoxy resin composition or underwater curable paint is filled into a pressure-resistant container, the container is moved into water, and then the composition or paint is applied onto the surface of the target object underwater with a brush, a roller, a trowel, or the like. The thickness of the applied composition or paint (i.e., coating film) is not particularly limited, but from the viewpoint of improving salt water resistance, is selected in the range of, for example, 0.1 to 5 mm.

The composition or paint applied onto the surface of the target object undergoes a curing reaction underwater, thereby forming a cured coating film.

[Use]

The present invention provides use of a composition containing a main agent epoxy resin and an epoxy resin curing agent containing a reaction composition (A) containing a reaction product of styrene and a polyamine compound represented by the following formula (1), as an underwater curable epoxy resin composition or an underwater curable paint.

$$H_2N\text{-}CH_2\text{-}A\text{-}CH_2\text{-}NH_2 \qquad (1)$$

In formula (1), A is a 1,2-phenylene group, a 1,3-phenylene group, or a 1,4-phenylene group.

When a composition containing a main agent epoxy resin and an epoxy resin curing agent containing the above-described reaction composition (A) is used as an underwater curable epoxy resin composition or an underwater curable paint, underwater applicability is good, and it is possible to form a coating film having high salt water resistance. As the method of using the composition, the above-described usage method can be employed.

[Underwater curable epoxy resin curing agent mixture]

The present invention also provides an underwater curable epoxy resin curing agent mixture containing: an underwater curable epoxy resin curing agent containing a reaction composition (A) containing a reaction product of styrene and a polyamine compound represented by the following formula (1); and a curing accelerator.

$$H_2N\text{-}CH_2\text{-}A\text{-}CH_2\text{-}NH_2 \qquad (1)$$

In formula (1), A is a 1,2-phenylene group, a 1,3-phenylene group, or a 1,4-phenylene group.

As described above, when a curing accelerator is contained in the underwater curable epoxy resin composition, underwater applicability is further improved. On the other hand, the inclusion of a curing accelerator usually tends to increase the viscosity of the composition. However, since the reaction composition (A) used in the present invention has a relatively low viscosity even among modified polyamine compounds, viscosity does not easily increase even when used in combination with a curing accelerator, and good underwater applicability can be obtained.

The underwater curable epoxy resin curing agent, the curing accelerator, and the preferred embodiments thereof are the same as described above.

The content of the curing accelerator in the underwater curable epoxy resin curing agent mixture is, from the viewpoint of obtaining good curability and underwater applicability, and the viewpoint of solubility, preferably in the range

of 0.1 to 20 parts by mass, more preferably 0.5 to 15 parts by mass, further preferably 1 to 15 parts by mass, still further preferably 2 to 15 parts by mass, still further preferably 5 to 15 parts by mass, still further preferably 8 to 15 parts by mass, and still further preferably 10 to 15 parts by mass with respect to 100 parts by mass of the underwater curable epoxy resin curing agent.

The total content of the underwater curable epoxy resin curing agent and the curing accelerator in the underwater curable epoxy resin curing agent mixture is preferably 50% by mass or more, more preferably 70% by mass or more, further preferably 80% by mass or more, and still further preferably 90% by mass or more, and is 100% by mass or less.

The viscosity of the underwater curable epoxy resin curing agent mixture at 25°C is, from the viewpoint of obtaining good underwater applicability, preferably 2,000 mPa·s or less, more preferably 1,500 mPa·s or less, further preferably 1,000 mPa·s or less, still further preferably 800 mPa·s or less, and still further preferably 600 mPa·s or less. The lower limit of the viscosity is not particularly limited, but is usually 10 mPa·s or more, and preferably 50 mPa·s or more. The viscosity of the underwater curable epoxy resin curing agent mixture at 25°C can be specifically measured by the method described in the Examples.

## Examples

The present invention will now be described in detail with reference to Examples and Comparative Examples, but the present invention is not limited to the following Examples. The underwater curable epoxy resin composition and the underwater curable epoxy resin curing agent mixture were evaluated by the following methods.

(Viscosity measurement)

The viscosity of the underwater curable epoxy resin curing agent or underwater curable epoxy resin curing agent mixture (underwater curable epoxy resin curing agent + curing accelerator) at 25°C was measured using an E-type viscometer "TVE-22H-type viscometer cone plate type" (manufactured by Toki Sangyo Co., Ltd.).

(Underwater applicability)

Using a blasted steel plate (70 mm × 150 mm × 3.2 mm thick), a mortar plate (70 mm × 150 mm × 5 mm thick), and a concrete plate (70 mm × 150 mm × 60 mm thick) as application target objects (application substrates), the underwater applicability of the underwater curable epoxy resin composition to these substrates was evaluated by the following method.

As shown in Fig. 1, an application substrate 10 was immersed in water (pure water or 5% salt water) 11 at 5°C or 23°C for three days or more to fully absorb water. At this time, if rust appeared, the rust was removed and the water was replaced. Next, as shown in Fig. 2(a) and 2(b), with the application substrate 10 immersed in water, two spacers 12 (manufactured by Ice Stick, 9 mm × 115 mm × approximately 2 mm thick) were placed on two sides of the application substrate 10, and appropriately weighted (not shown) so that the spacers did not float in the water. An underwater curable epoxy resin composition 13 of each example was poured between the two spacers 12 and formed into a film using a spatula (Fig. 3). At this time, the ease of application of the composition and the degree of dispersion of the composition in the water during application were checked.

Further, after the composition was deposited and formed into a film, the spacers 12 were removed, and the deposited composition was left to stand in water 11 to cure the composition 13 (Fig. 4). One day after application, the appearance of the deposited composition was visually observed to confirm the degree of aggregation.

The ease of application of the composition, the degree of dispersion of the composition in water during application, and the degree of aggregation of the composition after application were evaluated according to the following criteria.

<Ease of application of composition>

Ex: Excellent (sweeping with a spatula once or twice allows the composition to adhere to the substrate sufficiently and form a film)
G: Good (sweeping with a spatula 3 to 10 times allows the composition to adhere to the substrate sufficiently and form a film)
F: Fair (need to sweep with a spatula 11 or more times before a film can be formed on the substrate)
P: Poor (no matter how many times the composition is swept with a spatula, the composition does not adhere to the substrate and does not form a film)

<Degree of dispersion of composition in water during application>

Ex: Excellent (the composition does not disperse in water at all)
G: Good (the composition is slightly dispersed in water, but most the composition does not disperse and is on the substrate)
F: Fair (the composition is on the substrate, but a considerable amount of the composition is dispersed in water)
P: Poor (the composition is not on the substrate and is dispersed)

<Degree of aggregation of composition after application>

Ex: Excellent (the shape of the composition does not change before and after application)
G: Good (the composition slightly aggregates after application, and the shape of the edge portions is slightly wavy or raised)
F: Fair (the composition aggregates, the shape of the edge portions is obviously wavy, and the overall coating film becomes wavy and loses its smoothness)
P: Poor (the composition aggregates, the rectangular shape at the time of film-formation is completely lost, and the shape is round)

(Salt water resistance of coating film (23°C)

The underwater curable epoxy resin composition of each example was applied using an applicator onto a zinc phosphate-treated iron plate (manufactured by Paltek Corporation; SPCC-SD PB-N144 0.8 × 70 × 150 mm) to form a coating film (thickness immediately after application: 200 μm). Next, a test piece was produced by sealing the non-applied part of the zinc phosphate-treated iron plate with a rust preventative paint ("Million Primer" and "Million Clear" manufactured by Kansai Paint Co., Ltd.), and storing under conditions of 23°C and 50% R.H. for 7 days to cure. Using this test piece, a 5% salt water spray test was conducted as follows.
The test piece was placed in a salt water spray tester (" STP-90" manufactured by Suga Test Instruments Co., Ltd., in-bath temperature 35°C), and continuously sprayed with salt water (concentration 5% by mass). The appearance of the test piece was observed visually after 1, 4, 8, and 12 weeks, and evaluated according to the following criteria. Further, the presence or absence of spot rust was checked by visually observing the surface of the base material (zinc phosphate-treated iron plate) in contact with the coating film.

Ex: No confirmation of spot rust on the coating film surface and no change in coating film appearance
G: A small amount of spot rust could be confirmed on the coating film surface but there is no problem in terms of use, or there is a reduction in the glossiness of the coating film F: Spot rust could be confirmed on the coating film surface, or there is a substantial reduction in the glossiness of the coating film
P: A large amount of spot rust could be confirmed on the coating film surface, or blisters are formed

(Salt water swelling properties of cured product (23°C)

The underwater curable epoxy resin compositions of Examples 1 and 2 were injected into a 50 mm × 50 mm × 2 mm silicone mold and cured for 7 days in an environment of 23°C and 50% R.H. to produce a test plate. The initial mass ($W_0$) of the test plate was measured, and then the test plate was immersed in 5% salt water at 23°C. After a certain period of time, the test plate was taken out and the mass ($W_1$) of the test plate was measured. The rate of increase in weight was measured using the following formula. The results are shown in Table 1. A smaller value for the rate of weight increase indicates that it is more difficult for the cured product of the underwater curable epoxy resin composition to swell in salt water, meaning that the result is better.

$$\text{Rate of weight increase (\%)} = (W_1 - W_0)/W_0 \times 100$$

Production Example 1

(Production of metaxylylenediamine (MXDA)-epoxy adduct solution)

A separable flask having an internal volume of 1 liter equipped with a stirring device, a thermometer, a nitrogen inlet tube, a dropping funnel, and a cooling tube was charged with 38.8 g of metaxylylenediamine (Mitsubishi Gas Chemical Company, Inc., MXDA), and the temperature was raised to 80°C with stirring under a nitrogen stream. While maintaining the temperature at 80°C, 18.7 g (an amount such that the number of active hydrogens in the metaxylenediamine / number of epoxy groups in the epoxy compound = 10/1) of a polyfunctional epoxy resin having a glycidyloxy group derived from bisphenol A (("jER828" manufactured by Mitsubishi Chemical Corporation, epoxy equivalent weight: 186 g/eq) was added dropwise over 2 hours as an epoxy compound. After the dropwise addition was complete, the temperature was raised to 100°C and reaction was carried out for 2 hours to obtain a metaxylylenediamine (MXDA)-epoxy adduct. The adduct was diluted by adding benzyl alcohol, which is a non-reactive diluent, so as to be 40% by mass of the total amount, thereby obtaining a reaction composition solution having a concentration of the adduct of 60% by mass. The active hydrogen equivalent weight (AHEW) of the adduct solution (total amount including benzyl alcohol) was 97.4.

Production Example 2 (Production of Mannich reaction product of phenol-formaldehyde-metaxylylenediamine (MXDA))

A 2-liter flask equipped with a stirring device, a thermometer, a nitrogen inlet tube, a dropping funnel, and a cooling tube was charged with 612.9 g (4.5 mol) of metaxylylenediamine (Mitsubishi Gas Chemical Company, Inc., MXDA) and 423.45 g (4.5 moles) of phenol, and the temperature was raised to 80°C with stirring under a nitrogen stream. Next, 243.3 g (3.0 mol) of formalin (37% aqueous solution containing 8% methanol) was added dropwise at 80°C over 1.5 hours. After the dropwise addition was complete, the temperature was raised to 100°C and the reaction was carried out for 1.5 hours. The temperature was raised to 150°C over 2 hours while water was distilled off, and the reaction was carried out at the same temperature for 1 hour to obtain a Mannich reaction product of phenol-formaldehyde-metaxylylenediamine (MXDA) (AHEW 71.5).

Production Example 3

(Production of Mannich reaction product of phenol-formaldehyde-1,3-bis(aminomethyl)cyclohexane (1,3-BAC))

A Mannich reaction product of phenol-formaldehyde-1,3-bis(aminomethyl)cyclohexane (1,3-BAC) (AHEW 73.4) was obtained by performing a reaction in the same manner as in Production Example 2, except that 640.12 g (4.5 mol) of 1,3-bis(aminomethyl)cyclohexane (1,3-BAC, manufactured by Mitsubishi Gas Chemical Company, Inc.) was used instead of the metaxylylenediamine used in Production Example 2.

Production Example 4 (Production of Mannich reaction product of cardanol-formaldehyde-metaxylylenediamine (MXDA))

A 2-liter flask equipped with a stirring device, a thermometer, a nitrogen inlet tube, a dropping funnel, and a cooling tube was charged with 45 g (0.33 mol) of metaxylylenediamine (Mitsubishi Gas Chemical Company, Inc., MXDA) and 100 g (0.33 moles) of cardanol ("LB-7000" manufactured by Tohoku Chemical Industries, Ltd.), and the temperature was raised to 80°C with stirring under a nitrogen stream. Next, 27 g (0.33 mol) of formalin (37% aqueous solution containing 8% methanol) was added dropwise at 80°C over 1.5 hours, after the dropwise addition was complete, the temperature was raised to 100°C and the reaction was carried out for 1.5 hours. The temperature was raised to 150°C over 2 hours while water was distilled off, and the reaction was carried out at the same temperature for 1 hour to obtain a Mannich reaction product of cardanol-formaldehyde-metaxylylenediamine (MXDA) (AHEW 150).

Example 1 (Preparation and evaluation of underwater curable epoxy resin composition)

As the epoxy resin, which is the main agent of the epoxy resin composition, a liquid epoxy resin having a glycidyloxy group derived from bisphenol A ("jER828" manufactured by Mitsubishi Chemical Corporation, epoxy equivalent weight 186 g/eq) was used. As the epoxy resin curing agent, "Gaskamine 240" (manufactured by Mitsubishi Gas Chemical Company, Inc., AHEW: 103), which is a reaction composition containing a reaction product of styrene and metaxylylenediamine (MXDA), was used.

Titanium oxide ("TIPAQUE CR-97" manufactured by Ishihara Sangyo Kaisha, Ltd.) was added as a colorant to the main agent epoxy resin in the amount shown in Table 1, and the mixture was stirred and mixed at 23°C. Further, an underwater curable epoxy resin composition (underwater curable paint) was prepared by stirring and mixing at 23°C so that the ratio between the number of active hydrogens in the epoxy resin curing agent and the number of epoxy

groups in the main agent epoxy resin (number of active hydrogens in the epoxy resin curing agent/number of epoxy groups in the main agent epoxy resin) was 1/1.

The evaluations described above were performed on the obtained underwater curable epoxy resin composition. The results are shown in Table 1.

Example 2

As the main agent epoxy resin, "jER828" was used, as the epoxy resin curing agent, "Gaskamine 240" was used, and as the curing accelerator, salicylic acid (manufactured by Kanto Chemical Co., Inc.) was used.

9 g of "Gaskamine 240" and 1 g of salicylic acid were added together, and the mixture was stirred and mixed at 80°C for 2 hours to prepare an underwater curable epoxy resin curing agent mixture. The mixture was cooled to room temperature (23°C), then 16 g of the main agent epoxy resin "jER828" and 8 g of titanium oxide "TIPAQUE CR-97" as a colorant were added, and the mixture was stirred and mixed at 23°C to prepare an underwater curable epoxy resin composition.

The evaluations described above were performed on the obtained underwater curable epoxy resin composition. The evaluation of underwater applicability was conducted at 23°C. The results are shown in Table 1.

Comparative Examples 1 to 4

Underwater curable epoxy resin compositions were prepared and evaluated in the same manner as in Example 1, except that the added components and amounts used in the underwater curable epoxy resin compositions were changed as shown in Table 1. The evaluation of underwater applicability was conducted at 23°C. The results are shown in Table 1.

Example 3

As the main agent epoxy resin, an alkyl glycidyl ether diluted product of a liquid epoxy resin having a glycidyloxy group derived from bisphenol A ("jER801N" manufactured by Mitsubishi Chemical Corporation, alkyl glycidyl ether content: 15% by mass, epoxy equivalent weight: 215 g/eq) was used, as the epoxy resin curing agent, "Gaskamine 240" was used, and as the curing accelerator, salicylic acid was used.

9 g of "Gaskamine 240" and 1 g of salicylic acid were added together, and the mixture was stirred and mixed at 80°C for 2 hours to prepare an underwater curable epoxy resin curing agent mixture. The mixture was cooled to 5°C, then 18 g of the main agent epoxy resin "jER801N" and 8 g of titanium oxide "TIPAQUE CR-97" as a colorant were added, and the mixture was stirred and mixed at 5°C to prepare an underwater curable epoxy resin composition.

The evaluations described above were performed on the obtained underwater curable epoxy resin composition. The evaluation of underwater applicability was conducted at 5°C. The results are shown in Table 1.

Comparative Example 5

Underwater curable epoxy resin compositions were prepared and evaluated in the same manner as in Example 3, except that the added components and amounts used in the underwater curable epoxy resin compositions were changed as shown in Table 1. The evaluation of underwater applicability was conducted at 5°C. The results are shown in Table 1.

Table 1

| (% by mass) | | | Example 1 | Example 2 | Comparative Example 1 | Comparative Example 2 | Comparative Example 3 | Comparative Example 4 | Example 3 | Comparative Example 5 |
|---|---|---|---|---|---|---|---|---|---|---|
| Underwater curable epoxy resin composition | Main agent epoxy resin | jER828 | 49 | 47 | 50 | 53 | 53 | 43 | - | - |
| | | jER801N | - | - | - | - | - | - | 49 | 51 |
| | Underwater curable epoxy resin curing agent | G-240 (reaction composition (A)) | 27 | 26 | - | - | - | - | 24 | - |
| | | MXDA-epoxy adduct solution obtained in Production Example 1 | - | - | 26 | - | - | - | - | 23 |
| | | Mannich reaction product of phenol-formaldehyde-MXDA obtained in Production Example 2 | - | - | - | 20 | - | - | - | - |
| | | Mannich reaction product of phenol-formaldehyde-1,3-BAC obtained in Production Example 3 | - | - | - | - | 21 | - | - | - |
| | | Mannich reaction product of cardanol-formaldehyde-MXDA obtained in Production Example 4 | - | - | - | - | - | 35 | - | - |
| | Curing accelerator | Salicylic acid | - | 3 | - | - | - | - | 3 | - |
| | Colorant | Titanium oxide | 24 | 24 | 24 | 27 | 26 | 22 | 24 | 26 |
| Total (% by mass) | | | 100 | 100 | 100 | 100 | 100 | 100 | 100 | 100 |
| Parts by mass of curing accelerator with respect to 100 parts by mass of underwater curable epoxy resin curing agent | | | - | 11.5 | - | - | - | - | 12.5 | - |
| Number of active hydrogens in underwater curable epoxy resin curing agent / number of epoxy groups in main agent epoxy resin | | | 1/1 | 1/1 | 1/1 | 1/1 | 1/1 | 1/1 | 1/1 | 1/1 |
| Viscosity of underwater curable epoxy resin curing agent (25°C, unit mPa·s) | | | 66 | 66 | 265 | 1740 | 5930 | 1620 | 66 | 265 |
| Viscosity of epoxy resin curing agent mixture (underwater curable epoxy resin curing agent + curing accelerator) (25°C, unit mPa·s) | | | - | 540 | - | - | - | - | 540 | - |
| Underwater applicability | Water temperature (°C) | | 23 | 23 | 23 | 23 | 23 | 23 | 5 | 5 |
| | Ease of application of composition / degree of dispersion of composition in water during application / degree of aggregation of composition after application | | | | | | | | | |
| | Pure water | Blasted steel plate | Ex/G/Ex | Ex/G/Ex | Ex/G/Ex | Ex/Ex/G | Ex/Ex/G | G/Ex/P | F/G/Ex | F/Ex/G |
| | | Mortar | P/G/P | Ex/G/G | Ex/G/Ex | P/G/P | P/G/P | | P/P/P | P/P/P |
| | | Concrete | P/G/P | Ex/G/Ex | P/G/P | P/G/P | P/G/P | | P/P/P | P/P/P |
| | 5% Salt water | Blasted steel plate | Ex/Ex/F | Ex/Ex/G | Ex/Ex/F | Ex/Ex/F | Ex/Ex/F | | G/G/Ex | P/P/P |
| | | Mortar | P/G/P | Ex/Ex/G | Ex/Ex/Ex | P/G/P | P/G/P | | P/P/P | P/P/P |
| | | Concrete | P/G/P | Ex/Ex/F | P/G/P | P/G/P | P/G/P | | P/P/P | P/P/P |
| Salt water resistance of coating film (23°C) | 5% Salt water spray test | Zinc phosphate-treated steel plate (1/4/8/12 weeks) | Ex/Ex/Ex/Ex | Ex/Ex/Ex/Ex | F/F/F/F | Ex/Ex/G/F | Ex/Ex/G/F | | | |
| Salt water swelling properties of cured product (23°C) | Rate of weight increase (%) after immersion in 5% salt water | 1 Week | 0.08 | 0.17 | | | | | | |
| | | 2 Weeks | 0.24 | 0.33 | | | | | | |
| | | 4 Weeks | 0.24 | 0.50 | | | | | | |
| | | 8 Weeks | 0.57 | 0.75 | | | | | | |
| | | 12 Weeks | 0.65 | 0.92 | | | | | | |

*Diagonal line indicates not carried out

Examples 4 to 7

Underwater curable epoxy resin compositions were prepared and underwater applicability was evaluated in the same manner as in Example 2, except that the added components and amounts used in the underwater curable epoxy resin compositions were changed as shown in Table 2. The results are shown in Table 2.

Table 2

| (% by mass) | | | Example | | | | | |
|---|---|---|---|---|---|---|---|---|
| | | | 1 | 4 | 5 | 6 | 2 | 7 |
| Underwater curable epoxy resin composition | Main agent epoxy resin | jER828 | 49 | 48.7 | 48 | 48 | 47 | 47 |
| | Underwater curable epoxy resin curing agent | G-240 (reaction composition (A)) | 27 | 27 | 27 | 26 | 26 | 26 |
| | Curing accelerator | Salicylic acid | - | 0.3 | 1 | 2 | 3 | - |
| | | Triphenylphosphite | - | - | - | - | - | 3 |
| | Colorant | Titanium oxide | 24 | 24 | 24 | 24 | 24 | 24 |
| Total (% by mass) | | | 100 | 100 | 100 | 100 | 100 | 100 |
| Parts by mass of curing accelerator with respect to 100 parts by mass of underwater curable epoxy resin curing agent | | | - | 1.1 | 3.7 | 7.7 | 11.5 | 11.5 |
| Number of active hydrogens in underwater curable epoxy resin curing agent / number of epoxy groups in main agent epoxy resin | | | 1/1 | 1/1 | 1/1 | 1/1 | 1/1 | 1/1 |
| Viscosity of underwater curable epoxy resin curing agent (25°C, unit mPa·s) | | | 66 | 66 | 66 | 66 | 66 | 66 |
| Viscosity of epoxy resin curing agent mixture (underwater curable epoxy resin curing agent + curing accelerator) (25°C, unit mPa·s) | | | - | 150 | 220 | 430 | 540 | 80 |
| Underwater applicability | Water temperature (°C) | | 23 | 23 | 23 | 23 | 23 | 23 |
| | Ease of application of composition / degree of dispersion of composition in water during application / degree of aggregation of composition after application | | | | | | | |
| | Pure water | Blasted steel plate | Ex/G/Ex | Ex/G/Ex | Ex/G/Ex | Ex/G/Ex | Ex/G/Ex | Ex/G/Ex |
| | | Mortar | P/G/P | Ex/G/P | Ex/G/P | Ex/G/P | Ex/G/G | Ex/G/P |
| | | Concrete | P/G/P | Ex/G/P | Ex/G/G | Ex/G/G | Ex/G/Ex | Ex/G/P |
| | 5% Salt water | Blasted steel plate | Ex/Ex/F | Ex/G/G | Ex/G/G | Ex/G/Ex | Ex/Ex/G | Ex/G/G |
| | | Mortar | P/G/P | Ex/G/P | Ex/G/P | Ex/G/P | Ex/Ex/G | Ex/G/P |
| | | Concrete | P/G/P | Ex/G/P | Ex/G/P | Ex/G/P | Ex/Ex/F | Ex/G/P |

The components listed in Tables 1 and 2 are as follows.

<Main agent epoxy resin>

jER828:
Liquid epoxy resin having a glycidyloxy group derived from bisphenol A, "jER828" manufactured by Mitsubishi Chemical Corporation, epoxy equivalent weight 186 g/eq
jER801N:
Alkyl glycidyl ether diluted product of a liquid epoxy resin having a glycidyloxy group derived from bisphenol A "jER801N" manufactured by Mitsubishi Chemical Corporation, alkyl glycidyl ether content: 15% by mass, epoxy equivalent weight: 215 g/eq

<Epoxy resin curing agent>

G-240 (reaction composition (A)):

Reaction composition containing a reaction product of styrene and MXDA, "Gaskamine 240" manufactured by Mitsubishi Gas Chemical Company, Inc., AHEW: 103

<Curing accelerator>

Salicylic acid: Manufactured by Kanto Chemical Co., Ltd.

<Colorant>

Titanium oxide: "TIPAQUE CR-97" manufactured by Ishihara Sangyo Kaisha, Ltd.

As shown in Table 1, the underwater curable epoxy resin composition of the Examples has underwater applicability to blasted steel plate, and the salt water resistance of the formed coating film is higher than that of the underwater curable epoxy resin composition of the Comparative Examples (comparison between Examples 1 and 2 and Comparative Examples 1 and 3 / comparison between Example 3 and Comparative Example 5).

Comparing Examples 1 and 2, it can be seen that the underwater curable epoxy resin composition of Example 2 containing a curing accelerator has more improved underwater applicability. On the other hand, regarding the salt water swelling properties of the cured product, the underwater curable epoxy resin composition of Example 1 has lower salt water swelling properties than Example 2, and thus exhibited better results.

Comparative Example 4 is an example using a highly hydrophobic epoxy resin curing agent, but the underwater applicability was lower than that of the underwater curable epoxy resin composition of the Examples.

Table 2 shows the results of examining the type and amount of curing accelerators added to underwater curable epoxy resin compositions. It can be seen that when the content of the curing accelerator with respect to 100 parts by mass of the underwater curable epoxy resin curing agent is preferably 1 part by mass or more, more preferably 3 parts by mass or more, and further preferably 10 parts by mass or more, the underwater applicability of the underwater curable epoxy resin composition is improved.

Industrial Applicability

According to the present invention, it is possible to provide an underwater curable epoxy resin composition and an underwater curable paint that have good applicability underwater and can form a coating film having high salt water resistance, a cured product thereof, and an underwater curable epoxy resin curing agent mixture.

Reference Signs List

10 application substrate
11 water (pure water or 5% salt water)
12 spacer
13 underwater curable epoxy resin composition

**Claims**

**1.** An underwater curable epoxy resin composition comprising:

a main agent epoxy resin; and
an underwater curable epoxy resin curing agent comprising a reaction composition (A) comprising a reaction product of styrene and a polyamine compound represented by the following formula (1):

$$H_2N\text{-}CH_2\text{-}A\text{-}CH_2\text{-}NH_2 \qquad (1)$$

wherein A is a 1,2-phenylene group, a 1,3-phenylene group, or a 1,4-phenylene group.

2. The underwater curable epoxy resin composition according to claim 1, further comprising a colorant.

3. The underwater curable epoxy resin composition according to claim 1 or 2, further comprising a curing accelerator.

4. The underwater curable epoxy resin composition according to claim 3, wherein the curing accelerator is at least one selected from the group consisting of a carboxylic acid compound, an alkylphenol compound, a tertiary amine, and a phosphorus compound.

5. An underwater curable paint comprising the underwater curable epoxy resin composition according to any one of claims 1 to 4.

6. A cured product obtained by curing the underwater curable epoxy resin composition according to any one of claims 1 to 4 or the underwater curable paint according to claim 5 underwater.

7. A method of using an underwater curable epoxy resin composition or an underwater curable paint, comprising a step of applying the underwater curable epoxy resin composition according to any one of claims 1 to 4 or the underwater curable paint according to claim 5 onto a target object underwater.

8. Use of a composition comprising a main agent epoxy resin and an epoxy resin curing agent comprising a reaction composition (A) comprising a reaction product of styrene and a polyamine compound represented by the following formula (1), as an underwater curable epoxy resin composition or an underwater curable paint,

$$H_2N\text{-}CH_2\text{-}A\text{-}CH_2\text{-}NH_2 \qquad (1)$$

wherein A is a 1,2-phenylene group, a 1,3-phenylene group, or a 1,4-phenylene group.

9. An underwater curable epoxy resin curing agent mixture comprising:

an underwater curable epoxy resin curing agent comprising a reaction composition (A) comprising a reaction product of styrene and a polyamine compound represented by the following formula (1); and
a curing accelerator,

$$H_2N\text{-}CH_2\text{-}A\text{-}CH_2\text{-}NH_2 \qquad (1)$$

wherein A is a 1,2-phenylene group, a 1,3-phenylene group, or a 1,4-phenylene group.

[Fig. 1]

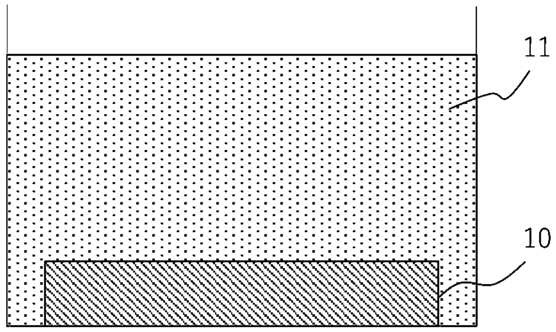


[Fig. 2]

(a)

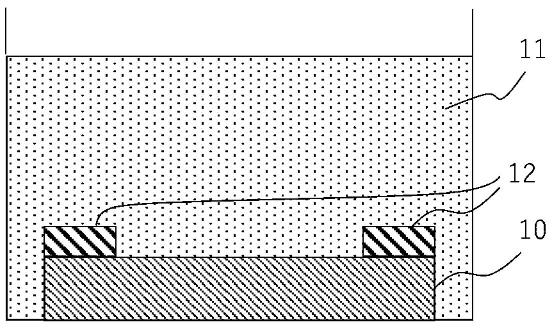


(b)

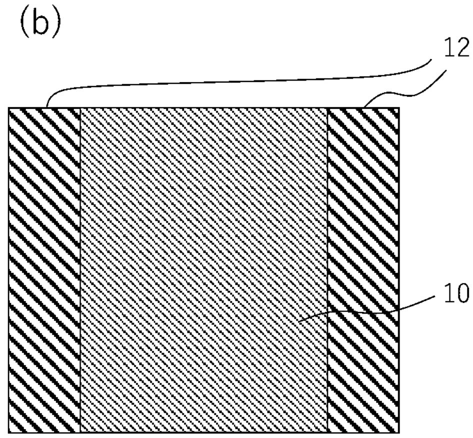


[Fig. 3]

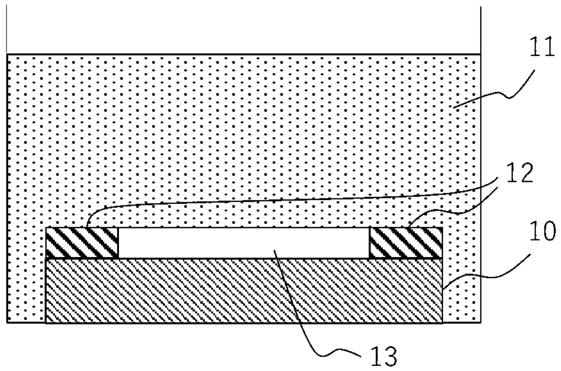

[Fig. 4]

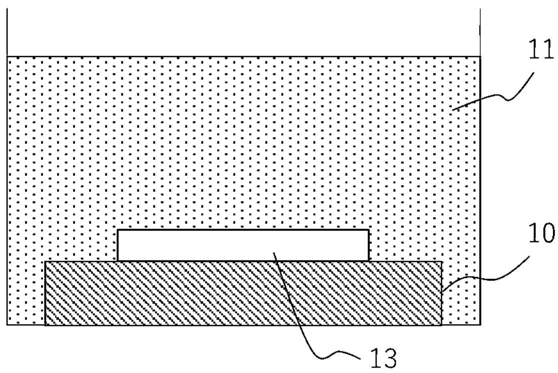

**INTERNATIONAL SEARCH REPORT**

International application No. **PCT/JP2022/034222**

**A. CLASSIFICATION OF SUBJECT MATTER**

***C08G 59/50***(2006.01)i; ***C08G 59/56***(2006.01)i; ***C09D 163/00***(2006.01)i; ***C09D 7/61***(2018.01)i; ***C09D 7/63***(2018.01)i
FI: C08G59/50; C08G59/56; C09D163/00; C09D7/63; C09D7/61

According to International Patent Classification (IPC) or to both national classification and IPC

**B. FIELDS SEARCHED**

Minimum documentation searched (classification system followed by classification symbols)

C08G59/50; C08G59/56; C09D163/00; C09D7/61; C09D7/63

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| Y | WO 2017/175740 A1 (MITSUBISHI GAS CHEMICAL COMPANY, INC.) 12 October 2017 (2017-10-12)<br>claims 5, 13, 15, 16, 18, paragraph [0093], example F-1, table 6 | 1-9 |
| Y | WO 2016/088528 A1 (DIC CORPORATION) 09 June 2016 (2016-06-09)<br>claim 7, paragraphs [0026], [0041], [0051], [0053], example 14, table 1 | 1-9 |
| Y | JP 2002-161076 A (MITSUBISHI GAS CHEMICAL COMPANY, INC.) 04 June 2002 (2002-06-04)<br>claims 3, 7, paragraph [0001], examples 1, 5, table 2 | 1, 2, 4-9 |
| Y | JP 2021-143270 A (KANSAI PAINT CO LTD) 24 September 2021 (2021-09-24)<br>claim 1, paragraph [0008], examples 14, 15, table 1-2 | 1, 2, 4-9 |
| Y | JP 2019-218237 A (OHBAYASHI CORP) 26 December 2019 (2019-12-26)<br>claims, paragraph [0034] | 1-9 |
| Y | JP 63-179973 A (CHUGOKU TORYO KK) 23 July 1988 (1988-07-23)<br>claim 1, examples | 1-9 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 October 2022** | **15 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
**PCT/JP2022/034222**

**C. DOCUMENTS CONSIDERED TO BE RELEVANT**

| Category* | Citation of document, with indication, where appropriate, of the relevant passages | Relevant to claim No. |
|---|---|---|
| Y | JP 63-30568 A (NIPPON PAINT CO LTD) 09 February 1988 (1988-02-09) claim 1, examples | 1-9 |

Form PCT/ISA/210 (second sheet) (January 2015)

**INTERNATIONAL SEARCH REPORT**
**Information on patent family members**

International application No.
**PCT/JP2022/034222**

| Patent document cited in search report | Publication date (day/month/year) | Patent family member(s) | Publication date (day/month/year) |
|---|---|---|---|
| WO 2017/175740 A1 | 12 October 2017 | US 2019/0112416 A1<br>claims 5, 13, 15, 16, 18, paragraph [0192], example F-1, table 6<br>EP 3441385 A1<br>CN 109071412 A<br>TW 201806925 A | |
| WO 2016/088528 A1 | 09 June 2016 | US 2018/0327629 A1<br>claim 7, paragraphs [0028], [0043], [0053], [0055], example 14, table 1<br>CN 107001590 A | |
| JP 2002-161076 A | 04 June 2002 | US 2002/0055605 A1<br>claims 3, 8, paragraph [0002], examples 1, 5, table 2<br>EP 1188740 A2<br>TW 539661 B<br>KR 10-2002-0021024 A | |
| JP 2021-143270 A | 24 September 2021 | (Family: none) | |
| JP 2019-218237 A | 26 December 2019 | (Family: none) | |
| JP 63-179973 A | 23 July 1988 | (Family: none) | |
| JP 63-30568 A | 09 February 1988 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 63030568 A
- JP 63142202 A
- JP 63179973 A
- JP 2019218237 A